Europäisches Patentamt

European Patent Office

Office européen des brevets

(19)

(11) Numéro de publication : **0 239 512 B1**

(12)

# FASCICULE DE BREVET EUROPEEN

(45) Date de publication du fascicule du brevet :
**11.03.92 Bulletin 92/11**

(21) Numéro de dépôt : **87420077.7**

(22) Date de dépôt : **20.03.87**

(51) Int. Cl.⁵ : **C01G 56/00,** C01G 43/00,
G21C 3/62

(54) *Procédé d'obtention d'oxydes mixtes frittes solubles dans l'acide nitrique à partir de solutions de nitrates.*

(30) Priorité : **25.03.86 FR 8604631**

(43) Date de publication de la demande :
**30.09.87 Bulletin 87/40**

(45) Mention de la délivrance du brevet :
**11.03.92 Bulletin 92/11**

(84) Etats contractants désignés :
**BE DE GB**

(56) Documents cités :
**EP-A- 0 143 726**
**FR-A- 2 496 324**
**FR-A- 2 526 006**

(73) Titulaire : **COMURHEX Société pour la
Conversion de l'Uranium en Métal et
Hexafluorure
Tour Manhattan La Défense 2 6, place de l'Iris
F-92400 Courbevoie (FR)**

(72) Inventeur : **Bachelard, Roland
99, Grande rue de la Guillotière
F-69007 Lyon (FR)**
Inventeur : **Germanez, Patrick
26, rue Abbé de l'Epée Chateau Double Deux
F-13090 Aix en Provence (FR)**

(74) Mandataire : **Vanlaer, Marcel et al
PECHINEY 28, rue de Bonnel
F-69433 Lyon Cédex 3 (FR)**

## Description

## DOMAINE TECHNIQUE

La présente invention décrit un procédé de fabrication de pastilles d'oxydes mixtes frittées, à base de $UO_2$ et $PuO_2$, principalement à usage de combustible nucléaire, qui soient entièrement solubles dans l'acide nitrique seul. Elles sont obtenues en partant des solutions de nitrates des éléments constitutifs.

Il s'applique aux mélanges mettant en jeu deux $UO_2$ et $PuO_2$ et éventuellement d'autres éléments pouvant intervenir dans la constitution d'un combustible nucléaire, par exemple Th, d'autres éléments fissibles ou fertiles, mais aussi leur combinaison avec des métaux des terres rares tels que Cérium, Gadolinium. Dans ce dernier cas, il s'agit de la fabrication de barres de contrôle à base d'oxydes frittés mixtes.

La matière des éléments constitutifs des mélanges peut avoir différentes origines : elle peut ou non avoir subi une irradiation, elle peut avoir une composition isotopique quelconque. En particulier, l'uranium peut être de l'uranium naturel ou enrichi, non irradié ou issu des usines de retraitement de combustible irradié après refroidissement et séparation du Pu et des produits de fission.

## ETAT DE LA TECHNIQUE

Les procédés de fabrication de combustibles sous forme d'oxydes sont bien connus, que ce soit pour faire des combustibles contenant de l'uranium seul ou des combustibles mixtes contenant des mélanges en proportions variables de deux ou davantage d'éléments tels que U, Pu, Th.

Les combustibles mixtes, par exemple U + Pu, se présentent généralement sous forme de pastilles, terme qui sera utilisé par la suite et qui désignera aussi toute autre forme géométrique pouvant être utilisée pour la réalisation des éléments combustibles.

Ils peuvent être obtenus soit à partir de mélange de poudres ($UO_2$ et $PuO_2$), soit à partir de solutions de nitrates de chacun des composants. Pour les obtenir à partir de solutions, on peut passer par exemple par une étape de coprécipitation de U et Pu ou par un procédé sol-gel (US-A-4397778, FR-A-2501061, FR-A-2386104) qui génèrent des effluents radioactifs à traiter avant rejet ou valorisation, ou par une étape de dénitration, en présencve d'un adjuvant (FR-A-2498364) ou non (FR-A-2496324), donnant un oxyde intermédiaire respectivement avec ou sans surface spécifique.

Après irradiation en chaudière nucléaire, les pastilles combustibles sont en général mises en solution pour pouvoir séparer chimiquement l'uranium imbrûlé, le plutonium et les produits de fission. Cette mise en solution pose des problèmes, la difficulté venant du fait que $PuO_2$ n'est que peu soluble dans l'acide nitrique pur; cette dissolution est généralement obtenue à chaud en présence d'acide fluorhydrique après broyage desdites pastilles; l'emploi de l'HF est coûteux, pose des problèmes de tenue à la corrosion des réacteurs et autres matériels et peut poser également certains problèmes d'exploitation, les ions fluorures ainsi introduits devant être parfois éliminés (FR-A-2480019). La dissolution des combustibles mixtes doit être par ailleurs complète.

Pour que $PuO_2$ soit soluble dans l'acide nitrique pur, il faut que $UO_2$ et $PuO_2$ soient en solution solide, cette solution solide pouvant être obtenue lors du frittage à condition qu'il y ait une répartition très homogène de $PuO_2$ et un contact très intime entre les deux espèces avant frittage.

Par ailleurs d'autres problèmes se posent autour de ces procédés qui mettent en oeuvre des produits très radioactifs ou dangereux comme Pu et des simplifications peuvent se traduire par des gains considérables en sécurité du personnel ou de l'environnement, et en coûts d'installations et d'exploitation.

Une première série de problèmes vient de la manipulation des poudres.

Actuellement, le Pu disponible se trouve principalement sous forme de poudre de $PuO_2$, ce qui nécessite pour sa mise en oeuvre dans les combustibles mixtes un broyage fin, coûteux, pour pouvoir obtenir une très bonne homogénéité de la distribution du Pu dans le mélange des poudres. Par exemple dans une pastille, pas plus de 5% du $PuO_2$ contenu ne doit se trouver dans des particules de diamètre de plus de 200 $\mu m$.

Un tel broyage, de même que le mélange des poudres, posent des problèmes de coûts et de salubrité du fait de la formation d'aérosols difficiles à neutraliser.

Ces problèmes se retrouvent dès qu'il s'agit de procéder à certaines opérations sur les pastilles ou les poudres comme :

– le broyage du combustible irradié refroidi, précédant sa mise en solution dans l'acide nitrique en présence d'acide fluorhydrique pour retraitement du combustible, les problèmes étant aggravés dans ce cas par la présence de produits de fission;

– le broyage lors du recyclage des pastilles de combustibles non conformes aux spécifications, soit pour procéder à l'obtention d'une poudre, de nouveau mise en forme par pressage et frittée, soit pour rendre le produit soluble;

– le broyage destiné à avoir une très bonne coulabilité des poudres d'oxyde intermédiaires obtenues au cours des procédés d'obtention des pastilles combustibles mixtes à partir de solutions de nitrates, notamment après des opérations de coprécipitation et calcination.

Un autre type de problèmes vient, dans les procédés partant de solutions de nitrates, de la présence d'effluents liquides générés lors d'opérations de coprécipitation. Le traitement et le rejet de cet effluent radioactif doit être considéré comme obligatoire.

Ces problèmes doivent être résolus tout en conservant aux poudres intermédiaires, obtenues au cours de l'élaboration des pastilles du combustible, leurs qualités intrinsèques. En particulier, elles doivent :

– couler sans problème, y compris sous l'effet de la seule gravité, lors des transferts d'un récipient à un autre, ou lors de la mise en forme du combustible. Habituellement, cette coulabilité est obtenue soit grâce à un broyage (dans les procédés partant de poudres), soit directement par l'utilisation de procédés sol-gel de coprécipitation (dans les procédés partant de solution de nitrates), soit grâce à un simple émottage ou léger broyage dans les procédés utilisant une coprécipitation ordinaire.

– conserver des propriétés telles que la mise en forme du combustible et le frittage puissent être réalisés dans les conditions actuellement connues.

De même, le combustible fini doit répondre évidemment aux spécifications très rigoureuses en vigueur.

Pour résoudre le problème de mise en solution de l'oxyde mixte fritté combustible de façon complète (moins de 0, 5% d'insoluble), sans faire appel à un broyage fin et coûteux préalable ni à des ajouts d'acide fluorhydrique, différents procédés plus ou moins aisés à mettre en oeuvre ont été proposés :

– par exemple un procédé, décrit dans le brevet FR-A-2419924, consiste, à partir d'un mélange de nitrate en solution, à oxyder dans cette solution le Pu à l'état VI, à précipiter en présence d'une solution de $(NH_4)_2CO_3$, de $NH_3$, et de $CO_2$ un carbonate mixte, à filtrer en créant ainsi un effluent à traiter, à calciner et réduire la totalité du précipité avant les opérations classiques de mise en forme et frittage. Ce procédé est une variante de coprécipitation.

– le brevet FR-A-2403628 décrit un procédé de manipulations de poudres comportant des operations successives de broyage, granulation, compactage, frittage avant frittage final, qui présente les inconvenients dûs précisément aux broyages.

– la demande de brevet FR-A-2513000 décrit un procédé de prétraitement avant dissolution des pastilles de combustible irradié, consistant à ajouter des sels de métaux alcalins ou alcalino-terreux, à chauffer pour transformer les oxydes en uranates ou plutonates et pour effectuer simultanément une pulvérisation du combustible.

– des procédés en milieu fondu ont aussi été décrits en utilisant par exemple des bains de nitrates (BE-A-815 189).

Aucun de ces procédés ne permet de résoudre de façon totalement satisfaisante le problème de la solubilité des pastilles d'oxydes mixtes frittées.

## OBJET DE L'INVENTION

L'invention a pour objet un procédé de fabrication de combustible nucléaire mixte à base d'oxydes frittés $UO_2$ et $PuO_2$ , qui permet d'obtenir des pastilles combustibles solubles telles quelles dans l'acide nitrique, en évitant ainsi l'emploi d'acide fluorhydrique.

Ce procédé a aussi pour objet de supprimer tout ou partie des opérations de broyage qui, dans l'art antérieur, peuvent être nécessaires pour dissoudre entièrement les pastilles une fois irradiées et refroidies ou les pastilles rebutées en cours de fabrication, ou pour rendre homogènes les mélanges de poudre. Il permet ainsi de supprimer tout risque d'aérosol dangereux.

Il a aussi pour objet de supprimer tout effluent du procédé, ce qui rend le procédé propre.

Un autre objet du procédé est d'obtenir des oxydes intermédiaires coulant bien.

Un autre objet est d'obtenir des pièces de formes ou pastilles frittées répondant parfaitement aux spécifications requises habituellement pour la fabrication de combustibles nucléaires.

## DESCRIPTION DE L'INVENTION

L'invention est un procédé d'obtention de pastilles d'oxydes mixtes frittées, principalement à usage de combustibles nucléaires, contenant toujours $UO_2$ et $PuO_2$ et éventuellement au moins un oxyde d'autres éléments du groupe Th, autres éléments fissiles ou fertiles, terres rares dont le gadolinium et le cezium, lesdites pastilles étant directement solubles dans l'acide nitrique sans utilisation d'additif ou de traitement de broyage préalable, à partir d'un mélange (a) de solutions de nitrates des éléments constitutifs dans les proportions voulues, qui est ensuite (b) concentré par un moyen quelconque sous vide ou non, de façon à éliminer l'eau libre, et par exemple obtenir le nitrate d'uranyle sous la forme hexahydratée et le nitrate de plutonium qui peut se trouver à l'état IV et/ou VI sous les formes respectives pentahydratée ou hexahydratée.

Ce procédé est caractérisé en ce qu'on procède ensuite successivement aux étapes suivantes :

c) un traitement thermique de dénitration donnant directement, sans adjuvant, une poudre d'oxyde mixte à grande réactivité, ayant une surface spécifique d'au moins 10 $m^2g^{-1}$, où l'uranium se trouve à l'état VI et le plutonium à l'état IV et/ou VI.

d) éventuellement une calcination atmosphérique à au moins 600°C, au cas où l'oxyde mixte obtenu en (c) serait trop réactif pour être réduit directement, pour amener notamment l'oxyde d'uranium à l'état $U_3O_8$ et/ou au cas où une telle température serait nécessaire pour transformer totalement en oxyde un nitrate d'un élément du mélange difficilement décomposable.

e) une réduction directe, sans broyage, de cet oxyde mixte pour amener l'uranium et le plutonium à l'état IV.

f) éventuellement une opération de stabilisation de l'oxyde mixte obtenu.

g) la mise en forme et le pressage de l'oxyde mixte obtenu éventuellement stabilisé, de façon à obtenir une pièce dite crue sous une forme quelconque adaptée au type d'élément combustible à fabriquer, mais préférentiellement sous forme de pastilles.

h) le frittage sous atmosphère réductrice et/ou légèrement oxydante à des températures allant de 700°C à 1700°C selon l'atmosphère choisie.

i) la rectification des pièces obtenues, permettant de mettre aux cotes les pièces et de révéler les défauts de textures éventuels (fissures...).

Le procédé permet donc

– d'obtenir un oxyde intermédiaire lors de l'étape (c) sans production d'effluent et sans avoir en conséquence à exploiter un procédé de traitement et de rejet de cet effluent,

– d'obtenir une poudre d'oxydes mixtes intermédiaires dans les étapes (c),(d),(e),(f), de coulabilité élevée

– d'obtenir des pièces massives frittées solubles telles quelles dans l'acide nitrique seul, c'est-à-dire sans avoir à procéder à un broyage ou à tout autre traitement préalable desdites pièces irradiées ou des rebuts de fabrication et à n'utiliser pour cette dissolution que de l'acide nitrique seul sans addition d'acide fluorhydrique,

en procédant à une dénitration par chauffage telle qu'on obtienne directement, sans addition d'adjuvant, un oxyde mixte ou non à grande réactivité principalement caractérisée par une grande surface spécifique, soit directement à partir de la solution concentrée obtenue en (b), soit après cristallisation par refroidissement de cette solution sous forme de particules solides.

Plusieurs variantes de dénitration thermique toutes destinées à obtenir un oxyde intermédiaire à grande résistivité lors de l'étape (c), présentant les avantages et caractéristiques vus plus haut, sont possibles :

– une première consiste, à partir de la solution concentrée obtenue en (b), à la cristalliser dans un premier temps soit sous forme de particules solides par écaillage ou par tout autre procédé de refroidissement, soit sous forme de particules solides sphériques obtenues par exemple par pulvérisation de la solution concentrée dans un fluide inerte refroidi ou par granulation sur support formé par l'oxyde lui-même ou par tout autre moyen, à traiter dans un deuxième temps ces particules par un procédé de dénitration thermique donnant directement, sans addition d'adjuvant, un oxyde de grande réactivité ayant une grande surface spécifique, tel que décrit dans le brevet FR-A-2536737 qui fait partie intégrante de la description. Cette dénitration thermique est conduite principalement sous une pression partielle de vapeur d'eau inférieure à 8,7 kPa (65 mm de Hg) de façon à ce qu'au cours du chauffage, jusqu'à une température d'au moins 260°C, celle-ci reste toujours inférieure au point de fusion desdites particules; elle conduit finalement à un oxyde mixte intermédiaire à grande surface spécifique qui se révèle frittable après les étapes de calcination éventuelle et de réduction selon les procédés connus;

– une autre variante partant de la solution concentrée obtenue en (b) se caractérise en ce qu'on la traite directement par un procédé de dénitration thermique en deux étapes, donnant directement, sans addition d'adjuvant, des oxydes à grande surface spécifique tel que décrit dans le brevet FR-A-2526006 qui fait partie intégrante de la description, où principalement la première étape est conduite jusqu'à une température généralement comprise entre 160°C et 260°C pour donner unb solide déshydraté et la deuxième étape jusqu'à une température d'au plus égale à 600°C; l'oxyde mixte à grande surface spécifique obtenu est frittable après calcination complémentaire éventuelle et réduction selon les procédés connus. Dans certains cas notamment quand la dénitration d'un élément du mélange est difficile, il est nécessaire comme vu plus haut de procéder à une calcination complémentaire à une température supérieure à 600°C pour obtenir un oxyde frittable. Tel est le cas par exemple pour le gadolinium où il faut chauffer à 8OO°C environ;

– une autre variante, présentant en plus des avantages et caractéristiques vus plus haut celui de supprimer la calcination éventuelle prévue en (d) qui aurait été destinée uniquement à diminuer la réactivité des oxydes, part encore de la solution concentrée obtenue en (b) et se caractérise en ce qu'on la traite par un procédé de dénitration thermique donnant directement, sans addition d'adjuvant, des oxydes mixtes de réactivité prédéterminée, réglée par la surface spécifique tel que décrit dans la demande de brevet FR-A-2555566 qui fait partie intégrante de la description, procédé conduit principalement en deux étapes, la première pour déshydrater incomplètement la solution (b), la deuxième pour décomposer le produit issu de la première sous pression contrôlée de vapeur d'eau qui, suivant sa valeur, détermine la réactivité obtenue. Bien que ce document décrive l'obtention de poudres d'oxydes mixtes, à réactivité variable, il ne concerne cependant pas le problème de dissolution de pastilles mixtes contenant $PuO_2$, ne donne pas d'exemple d'obtention desdites pastilles frittées d'oxydes mixtes contenant Pu, et ne suggère donc pas l'influence que pourrait avoir le choix d'une forte réactivité pour résoudre ledit problème ;

– d'autres variantes présentant en plus des avantages vus plus haut celui de supprimer tout ou partie des phases d'élimination de l'azote des différents procédés de dénitration thermique, se caractérisent en ce que :

– dans le cas où la dénitration est conduite selon le procédé décrit dans le brevet FR-A-2536737 effectué à partir de nitrates solides, on arrête le procédé dès qu'on a obtenu un produit infusible et on procède directement sur celui-ci à la réduction prévue au stade (e) sur le produit solide infusible déshydraté obtenu à l'issue de la première étape;

– dans le cas où la dénitration est conduite selon le procédé décrit dans la demande FR-A-2 555 566, effectué à partir de nitrates en solution, on procède directement à la réduction prévue au stade (e) du produit solide partiellement déshydraté obtenu à l'issue de la première étape.

Les poudres d'oxydes mixtes obtenues en (c) sont parfaitement coulantes. Cependant dans certains cas si la coulabilité n'était pas suffisante, il serait nécessaire de prévoir un émottage, non polluant, qui permettrait d'atteindre le résultat, sans avoir les inconvénients de broyages fins.

Les solutions pures de nitrate d'uranium ou de plutonium ou de tout autre élément qui servent à faire le mélange (a), peuvent être obtenues par des moyens divers. En particulier, la solution de nitrate d'uranyle peut contenir de l'uranium provenant d'une seule ou de plusieurs des sources suivantes :

– uranium naturel,
– uranium enrichi non irradié,
– uranium appauvri non irradié,
– uranium enrichi irradié (ex retraitement)
– uranium appauvri irradié (ex retraitement).

Dans le cas où c'est l'uranium enrichi qui est utilisé, il peut être issu des installations classiques d'enrichissement où il est obtenu habituellement sous forme $UF_6$ pur, il subit alors une série de transformations chimiques connues destinées à le mettre sous forme de solutions, par exemple successivement hydrolyse, réduction, calcination, dissolution. Dans le cas d'un enrichissement par laser, l'uranium enrichi est obtenu sous forme de métal impur qui est alors dissout dans l'acide nitrique, en présence ou non d'un agent oxydant comme l'air, l'oxygène, l'eau oxygénée, purifié par des moyens connus, comme l'extraction-réextraction par solvant tributylphosphate, pour obtenir une solution de nitrate d'uranyle pouvant servir directement à l'obtention des mélanges de l'étape (a). Avant dissolution, le métal peut aussi être oxydé par tout moyen approprié tel que l'air, l'oxygène, de façon à réduire la consommation d'acide nitrique ou l'émission de vapeurs nitreuses lors de la dissolution.

L'opération de dénitration s'effectue avec émission de vapeur d'eau et de vapeurs nitreuses NOx. Selon un perfectionnement du présent procédé, ces vapeurs nitreuses peuvent être captées, oxydées par l'air, l'oxygène, le péroxyde d'hydrogène ou tout autre agent oxydant, puis condensées de façon à récupérer de l'acide nitrique qui peut être recyclé directement ou après concentration et sans autre traitement, pour les opérations de dissolutions par exemple.

Le procédé selon l'invention s'applique préférentiellement aux mélanges U+Pu, le rapport en poids $\frac{Pu}{U+Pu}$ pouvant atteindre 0,4, mais aussi aux combinaisons avec les métaux des terres rares notamment le cérium et le gadolinium.

La demanderesse a constaté de façon inattendue que les opérations de réduction, de mise en forme par pressage et de frittage effectuées à partir de ces oxydes mixtes intermédiaires obtenus directement par un des procédés de dénitration dit à grande réactivité, peuvent être conduites dans des conditions opératoires identiques à celles utilisées avec des oxydes mixtes intermédiaires issus de procédés du type coprécipitation ou mélange de poudres, bien que les oxydes ex dénitration à grande réactivité présentent des caractéristiques physiques différentes. Elle a même constaté que la quantité de liant ajoutée pour le frittage pouvait être diminuée de façon importante.

Le procédé selon l'invention conduit ainsi à des pièces combustibles d'oxydes frittés, habituellement des

EP 0 239 512 B1

pastilles, qui sont directement solubles dans l'acide nitrique seul, sans broyage préalable et sans addition d'acide fluorhydrique, que ces pastilles aient ou non subi une irradiation. Le recyclage des rebuts de fabrication, de même que la mise en solution en vue du retraitement des combustibles usés refroidis se fait ainsi dans des conditions beaucoup plus simples et plus sûres puisque le broyage très fin n'est plus nécessaire.

Le produit satisfait très largement aussi les exigences de vitesse de dissolution données par les professionnels; elle est du même ordre de grandeur que celle obtenue avec l'uranium seul. Il en est de même du rendaient de dissolution qui est très élevé puisqu'il dépasse 99,9 % . Ces résultats remarquables sont dus à ce que la solution solide $UO_2$-$PUO_2$ obtenue par l'effet de la température du frittage est très bonne grâce à la très grande intimité du mélange des différents éléments constitutifs qui n'est pas détruite par la dénitration.

Dans la coprécipitation, les constituants ne précipitent pas tous dans des conditions identiques, ce qui détruit en partie cette homogénéité, obtenue lors du mélange en phase liquide et à la dénitration.

Ainsi, l'homogénéité de l'oxyde mixte fritté est quasiment parfaite puisque non seulement elle répond à la spécification (aucune particule de $PuO_2$ n'excède un diamètre de 400 μm mesuré par autoradiographie α et le diamètre moyen est inférieur à 100 μm), mais encore aucune particule plutonifère n'est détectée que ce soit par autoradiographie α, rayons X, ou microsonde.

De même, toutes les autres caractéristiques exigées pour le combustible sont satisfaites d'une façon beaucoup plus large : notamment densités plus élevées, stabilité dimensionnelle, homogénéité parfaite, meilleure texture (absence de fissures...), porosité, dimension des particules.

EXEMPLES

. Exemple 1

Dans cet exemple, on a tout d'abord préparé la solution de $Pu(NO_3)_4$ en concentrant par distillation 1000 cm³ une solution ayant 1,25 normalité d'acide nitrique et contenant 21,95 g de Pu pour l'amener à un volume de 330 cm³.

– On a alors ajouté 726,8 g de nitrate d'uranyle hexahydraté pour obtenir un mélange de nitrate en solution ou le rapport $\dfrac{Pu}{U + Pu} = 0,06$.

– La solution mixte obtenue a été concentrée jusqu'à 140°C environ.

– On a ensuite cristallisé cette solution par écaillage en la refroidissant à 95°C. On a obtenu 744 g de produit solide.

Ce produit a été ensuite déshydraté et dénitré selon le procédé décrit dans le brevet FR-A-2 535 737 en chauffant sous pression totale réduite inférieure à 0,13 kPa (1 mm de mercure) et en maintenant la température du produit au cours de la montée en température toujours inférieure à son point de fusion :

vitesse de montée en température obtenue : 250°C/h

température maximum atteinte : 400°C.

La surface spécifique de l'oxyde intermédiaire obtenu est de 40 m²/g.

– La calcination de ce produit a été faite pendant 1 h à 600°C et a été suivie par un émottage à la main, le produit passant ainsi le tamis 125 μm.

– La réduction a été faite à 600°C pendant 1 h avec d' l'hydrogène dilué à 5 % dans de l'argon.

– La stabilisation a été faite à 40°C avec un mélange argon-air :

$$10 \text{ mn avec un rapport } \frac{Ar}{Air} = \frac{5}{1}$$

$$20 \text{ mn } \quad " \qquad " \qquad " \qquad \frac{2}{1}$$

$$40 \text{ mn } \quad " \qquad " \qquad " \qquad \frac{1}{1}$$

et a été suivie d'un refroidissement sous vide.

– Le pastillage a été réalisé avec une presse hydraulique à matrice flottante par pression directe après addition de 0,7 % de stéarate de Zn. 3 essais on été réalisés : à 3,5 t/cm² - 4,5 t/cm² et 5,5 t/cm².

– Le frittage a été réalisé en atmosphère réductrice (mélange Ar-$H_2$ contenant 5 % d'hydrogène) suivant le programme de chauffage suivant :

150°C/h jusqu'à 900°C

300°C/h jusqu'à 1640°C, suivi d'un palier de 6 h.

6

A titre d'essai un deuxième palier de 6 h à 1740°C a été fait.
Les résultats suivants ont été obtenus :

| Essai | Pression Pastillage t/cm$^2$ | Densités (en % de la densité théorique) | | | |
|---|---|---|---|---|---|
| | | Crue | Frittée | Palier à 1640°C | Palier à 1740°C |
| 1 | 3,5 | 45,5 | 94,4 | 94,7 | 94,6 |
| 2 | 4,5 | 49,0 | 95,0 | 94,8 | 94,6 |
| 3 | 5,5 | 51,7 | 93,2 | 93,3 | 93,3 |

On voit que les densités sont acquises dès que le produit est fritté et que le maintien en palier de température n'est pas nécessaire. Elles répondent aux spécifications.

Les rendements de dissolution dans l'acide nitrique 14N à 100°C pendant 6 h sont excellents :

99,94 % pour le produit fritté de l'essai (3)

99,99 % pour le produit refritté à 1740°C de l'essai (2)

99,96 % pour le produit fritté de l'essai (1).

L'autoradiographie tout en décellant une légère hétérogénéité de la distribution du Pu montre cependant que le produit satisfait les spécifications, et n'a pas d'influence sur la vitesse ou le rendement de dissolution.

. Exemple 2

Les produits de départ et le procédé suivi dans cet exemple ont été les mêmes que dans l'exemple 1. Il s'en distingue principalement par l'absence d'émottage, de plus certains paramètres ont été légèrement modifiés.

– A la dénitration où la vitesse de montée en température obtenue est 250°C/h et la température atteinte de 380°C. La pression réduite était identique.

– La calcination a été effectuée à 525°C pendant 1 h. L'émottage a été supprimé.

– La réduction et la stabilisation ont été identiques.

A ce stade, tout le produit a été passé au tamis 1,6 mm.

– Le pressage a été effectué avec 0,4 % de stéarate de Zn avec une pression de 5 t/cm$^2$.

– Le frittage a été suivi par un palier de 6 h à 1640°C.

La densité crue obtenue est 44,9 % de la densité théorique

La densité frittée obtenue est 93,9 % de la densité théorique.

L'absence d'émottage ne se fait que peu sentir.

. Exemple 3

Dans cet exemple, les solutions de départ ont été les mêmes que dans l'exemple 1. La calcination a été supprimée.

– La concentration a été arrêtée à 120°C.

– La cristallisation par écaillage a été effectuée à 40°C.

– La dénitration a été effectuée sous vide selon les conditions opératoires de l'exemple 1 et arrêtée à 420°C.

– Ce produit a été soumis directement à la réduction sous atmosphère d'un mélange Argon contenant 5 % d'hydrogène, à une température de 700°C.

– La stabilisation a été faite à 40°C comme dans l'exemple 1. A ce stade le produit a été passé au tamis 1 mm.

– Le pastillage a été fait sous une pression de 5,8 t/cm$^2$.

– Le frittage a été poursuivi jusqu'à obtenir un palier de 6 h à 1600°C sous atmosphère Ar, 5 % H$_2$.

La densité crue obtenue est 50,5 % de la densité théorique

La densité frittée obtenue est 96,3 % de la densité théorique.

Le rendement de dissolution dans l'acide nitrique chaud (100°) pendant 6 h est toujours très élevé : 99,94 %.

. Exemple 4

Dans cet exemple, la solution de départ a été obtenue selon un procédé identique à celui de l'exemple 1, mais avec un rapport $\dfrac{Pu}{U + Pu}$ égal à 0,25 et l'absence d'émottage.

– La concentration a été arrêtée à 140°C.

– La cristallisation par écaillage a été effectuée à 80°C.

– La dénitration a été conduite comme dans l'exemple 3, en s'arrêtant à 420°C pour obtenir un produit intermédiaire solide directement soumis à la réduction en atmosphère Ar, 5 % $H_2$ à 700°C.

– La stabilisation a été faite comme dans l'exemple 1 à 40°C.

A ce stade, le produit a été passé au tamis 1,5 mm.

– Le pastillage a été identique à celui de l'exemple 3 (5,8 t/cm²).

– Le frittage a aussi été identique à celui de l'exemple 3.

La densité crue obtenue est de 50,8 % de la densité théorique

La densité frittée obtenue est de 93,6 % de la densité théorique.

Le rendement de dissolution dans l'acide nitrique 14N chaud (100°C) pendant 6 h est toujours très élevé : 99,93 %.

**Revendications**

1. Procédé d'obtention de pastilles d'oxydes mixtes frittées, contenant toujours $UO_2$ et $PuO_2$ et éventuellement au moins un oxyde d'autres éléments fissiles ou fertiles ou de terres rares, lesdites pastilles étant directement solubles dans l'acide nitrique sans utilisation d'additif ou de traitement de broyage préalable, à partir d'un mélange (a) de solutions de nitrates des éléments constitutifs qui est ensuite concentré (b), caractérisé en ce qu'on procède successivement aux étapes suivantes :

c) un traitement thermique de dénitration donnant directement, sans adjuvant, une poudre d'oxyde mixte à grande réactivité, ayant une surface spécifique d'au moins 10 m²g$^{-1}$ où l'uranium se trouve à l'état VI et le plutonium à l'état IV et/ou VI

d) une calcination éventuelle pour amener l'oxyde d'uranium à l'état $U_3O_8$ et/ou achever la transformation en oxyde des nitrates difficilement décomposables

e) réduction directe, sans broyage, pour amener l'uranium et le plutonium à l'état IV

f) stabilisation éventuelle de l'oxyde mixte obtenu

g) mise en forme et pressage de l'oxyde mixte ainsi obtenu, de façon à obtenir une pièce de forme en matière dite crue, adaptée au type d'élément combustible à fabriquer, mais préférentiellement sous forme de pastilles

h) frittage sous atmosphère réductrice et/ou légèrement oxydante à des températures allant de 700°C à 1700°C selon l'atmosphère choisie

i) rectification des pièces obtenues

ledit procédé permettant d'obtenir comme résultat des étapes c), d), e) et f), des poudres d'oxydes mixtes de coulabilité élevée, frittables sans broyage, procédé au moyen duquel aucun effluent gênant n'est produit à l'étape c).

2. Procédé selon la revendication 1, caractérisé en ce que la dénitration thermique donnant un oxyde à grande réactivité est effectuée en chauffant directement des particules solides de nitrates, préalablement obtenues par cristallisation par refroidissement de la solution concentrée issue de l'étape b ), principalement sous une pression partielle de vapeur d'eau inférieure à 8,7 kPa (65 mm de mercure) et de façon qu'au cours du chauffage jusqu'à une température d'au moins 260°C, la température desdites particules solides reste, à tout moment, inférieure à leur point de fusion.

3. Procédé selon la revendication 2, caractérisé en ce que la dénitration thermique donnant un oxyde à grande réactivité est effectuée en chauffant directement des particules solides sphériques, préalablement obtenues par pulvérisation de la solution concentrée issue de l'étape (b) dans un fluide inerte refroidi, principalement sous une pression partielle de vapeur d'eau inférieure à 8,7 kPa (65 mm de mercure) et de façon qu'au cours du chauffage jusqu'à une température d'au moins 260°C, la température desdites particules solides reste, à tout moment, inférieure à leur point de fusion.

4. Procédé selon la revendication 2, caractérisé en ce que la dénitration thermique donnant un oxyde à grande réactivité est effectuée en chauffant directement des particules solides sphériques, préalablement obtenues par granulation sur un support formé par l'oxyde lui-même, principalement sous une pression partielle de vapeur d'eau inférieure à 8,7 kPa (65 mm de mercure) et de façon qu'au cours du chauffage jusqu'à une

EP 0 239 512 B1

température d'au moins 260°C, la température desdites particules reste, à tout moment, inférieure à leur point de fusion.

5. Procédé selon la revendication 1, caractérisé en ce que la dénitration est effectuée en chauffant directement les nitrates sous forme liquide issus de l'étape (b), principalement en deux étapes, dans la première le chauffage est conduit jusqu'à une température comprise entre 160 et 260°C pour donner un solide déshydraté, dans la deuxième il est conduit jusqu'à une température d'au plus égale à 600°C.

6. Procédé selon la revendication 1, caractérisé en ce que la dénitration thermique donnant un oxyde à réactivité prédéterminée réglée par la surface spécifique est effectuée en chauffant directement les nitrates sous forme liquide issus de l'étape (b) principalement en deux étapes, la première en déshydratant incomplètement la solution issue de l'étape (b), la deuxième en décomposant le produit résultant sous pression contrôlée de vapeur d'eau, laquelle suivant la valeur imposée détermine la réactivité obtenue.

7. Procédé selon l'une quelconque des revendications 1,2,5 ou 6, caractérisé en ce que, dans le but de supprimer tout ou partie des phases d'élimination de l'azote dans les différentes étapes de dénitration thermique, on procède à la réaction de réduction de l'étape (e) directement sur le produit intermédiaire solide infusible obtenu en cours de dénitration.

8. Procédé selon l'une quelconque des revendications 1,2,5 à 7, caractérisé en ce que les oxydes mixtes frittés sont obtenus à partir de mélanges des solutions de nitrates d'uranium et de plutonium et des éléments du groupes Th, éléments fissiles ou fertiles, et éléments des terres rares.

9. Procédé selon l'une quelconque des revendications 1,2,5 à 8 caractérisé en ce que les éléments des terres rares sont le cérium et le gadolinium.

10. Procédé selon l'une quelconque des revendications 1,2,5 à 9, caractérisé en ce que l'uranium contenu dans la solution de nitrate de départ appartient à l'une ou à plusieurs des catégories suivantes : uranium naturel, enrichi non irradié, appauvri non irradié, enrichi irradié, appauvri irradié.

11. Procédé selon l'une quelconque des revendications 1,2,5 à 10, caractérisé en ce que tout ou partie de l'uranium contenu dans la solution de nitrate de départ provient d'un cycle d'enrichissement par laser.

12. Procédé selon l'une quelconque des revendications 1,2,5 à 11, caractérisé en ce que l'uranium contenu dans la solution de nitrate de départ provient d'un cycle d'enrichissement par laser conduisant à de l'uranium sous forme métallique impure qui subit les traitements préalables de dissolution dans l'acide nitrique, en milieu oxydant ou non, et de purification.

13. Procédé selon l'une quelconque des revendications 1,2,5 à 12, caractérisé en ce que la concentration effectuée dans l'étape (b) est conduite jusqu'à obtention des formes hexahydratées du nitrate d'uranyle, et des formes respectivement pentahydratée et hexahydratée du nitrate de plutonium dans ses états IV et/ou VI.

## Claims

1. A process for obtaining pellets of sintered mixed oxides, essentially containing $UO_2$ and $PuO_2$ and possibly at least one oxide of a fissile or fertile element or of a rare-earth metal, the said pellets being directly soluble in nitric acid without the use of an additive or a preliminary crushing treatment, starting from a mixture (a) of solutions of nitrates of the constituent elements that is subsequently concentrated (b), characterised in that the following steps are carried out successively:

(c) denitration by heat treatment giving directly, without an additive, a mixed oxide powder having a large reactivity, having a specific surface of at least 10 $m^2g^{-1}$ where uranium is found in the VI state and the plutonium in the IV and/or VI state;

(d) a possibly calcination to bring the uranium oxide to the form $U_3O_8$ and to achieve the transformation into oxide of nitrates that it is difficult to decompose;

(e) direct reduction without crushing to bring the uranium and the plutonium to the IV state;

(f) possible stabilisation of the resulting mixed oxide;

(g) shaping and compressing the mixed oxide thus obtained so as to produce a shaped piece of the said raw material adapted to the type of combustible element that is to be made, but preferably in the form of pellets;

(h) roasting in a reducing and/or slightly oxidising atmosphere at temperatures in the range 700°C to 1700°C according to the atmosphere selected and

(i) rectifying the resulting pieces of material,

the said process permitting of the production as a result of steps (c), (d), (e) and (f) of readily flowing mixed oxide powders that can be roasted without breaking, the procedure being such that no troublesome effluent is produced in step (c).

2. A process according to Claim 1 characterised in that the thermal denitration giving a highly reactive oxide

9

is carried out by directly heating solid nitrate particles, preliminarily obtained by crystallisation by cooling of the concentrated solution from step (b), principally under a partial pressure of water vapour less than 8.7 kPa (65 mm of mercury) and in a manner such that, during the heating to a temperature of less than 260°C, the temperature of the said solid particles remains at all times less than their melting point.

3. A process according to Claim 2 characterised in that the thermal denitration giving an oxide of high reactivity is carried out by directly heating spherical solid particles, previously obtained by pulverising the concentrated solution from step (b) in an inert cooled fluid, principally under a partial pressure of water vapour less than 8.7 kPa (65 mm of mercury) and in a manner such that during the heating to a temperature of less than 260°C, the temperature of the said solid particles remains at all times less than their melting point.

4. A process according to Claim 2 characterised in that the thermal denitration giving an oxide of high reactivity is carried out by directly heating spherical solid particles, previously obtained by granulating on a support formed by the oxide itself, principally under a partial pressure of water vapour less than 8.7 kPa (65 mm of mercury) and in a manner such that during the heating to a temperature of less than 260°C, the temperature of the said solid particles remains at all times less than their melting point.

5. A process according to Claim 1 characterised in that the denitration is effected by directly heating the nitrates in the form of liquid from step (b), principally in two steps, in the first of which the heating is carried out to a temperature between 160 and 260°C to give a dehydrated solid and in the second of which it is carried out to a temperature at least equal to 600°C.

6. A process according to Claim 1 characterised in that the thermal denitration giving an oxide of predetermined reactivity depending on the specific surface is carried out by directly heating the nitrates in the form of liquid from step (b), principally in two steps, the first dehydrating incompletely the solution from step (b), the second decomposing the resulting product under controlled water vapour pressure, which following the value maintained determines the reactivity obtained.

7. A process according to any one of Claims 1, 2, 5 and 6 characterised in that with the aim of suppressing all or part of the phases of nitrogen elimination in the different steps of the thermal denitration, the reduction reaction of step (e) is carried out directly on the intermediate infusible solid product obtained during the denitration.

8. A process according to any one of Claims 1, 2 and 5 to 7, characterised in that the mixed sintered oxides are obtained starting from mixtures of solution of nitrates of uranium, plutonium and elements of the thorium group, fissile or fertile elements, and rare-earth elements.

9. A process according to any one of Claims 1, 2 and 5 to 8, characterised in that the rare-earth elements are cerium and gadolinium.

10. A process according to any one of Claims 1, 2 and 5 to 9, characterised in that the uranium contained in the starting nitrate solution is in one or more of the following categories: natural, enriched non-irradiated, depleted non-irradiated, enriched irradiated and depleted irradiated uranium.

11. A process according to any one of Claims 1, 2 and 5 to 10, characterised in that all or part of the uranium contained in the starting nitrate solution is from a laser-enrichment cycle.

12. A process according to any one of Claims 1, 2 and 5 to 11, characterised in that the uranium contained in the starting nitrate solution is from a laser-enriched cycle leading to uranium in impure metallic form which has undergone preliminary dissolution treatment in nitric acid in an oxidizing or non-oxidizing medium, and purification.

13. A process according to any one of Claims 1, 2 and 5 to 12, characterised in that the concentration carried out in step (b) is conducted until the hexahydrate form of uranyl nitrate is obtained and the forms of plutonium nitrate pentahydrate and hexahydrate are in states IV and/or VI respectively.

## Patentansprüche

1. Verfahren zur Gewinnung von gesinterten Mischoxidpastillen, die stets $UO_2$ und $PuO_2$ und eventuell wenigstens ein Oxid anderer spaltbarer oder brütbarer Elemente oder Seltener Erden enthalten, welche Pastillen in Salpetersäure ohne Verwendung von Zusatz oder Vorzerkleinerungsbehandlung direkt löslich sind, ausgehend von einem Gemisch (a) von Lösungen von Nitraten der Bestandsteilselemente, das anschließend konzentriert (b) wird, **dadurch gekennzeichnet,** daß man nacheinander die folgenden Schritte durchführt:

   c) eine Denitrierungs-Wärmebehandlung, die ohne Zusatzmittel direkt ein Mischoxidpulver großer Reaktivität mit einer spezifischen Oberfläche von mindestens $10 \, m^2 \, g^{-1}$ ergibt, worin sich das Uran im VI-Zustand und das Plutonium im IV- und/oder VI-Zustand befinden,

   d) eine eventuelle Kalzinierung zum Bringen des Uranoxids in den $U_3O_8$-Zustand und/oder zum Vollenden der Umwandlung der schwer zersetzbaren Nitrate in Oxid,

EP 0 239 512 B1

e) direkte Reduktion ohne Zerkleinerung zum Bringen des Urans und des Plutoniums in den IV-Zustand,

f) eventuelle Stabilisierung des erhaltenen Mischoxids,

g) Formgebung und Pressen des so erhaltenen Mischoxids derart, um ein Formstück aus sog. Rohmaterial, das für den herzustellenden Brennelementtyp geeignet ist, jedoch vorzugsweise in Form von Pastillen zu erhalten,

h) Sinterung in reduzierender und/oder leicht oxidierender Atmosphäre bei Temperaturen, die je nach der gewählten Atmosphäre von 700 °C bis 1700 °C reichen,

i) Rektifikation der erhaltenen Stücke,

welches Verfahren ermöglicht, als Ergebnis der Schritte c), d), e) und f) ohne Zerkleinerung sinterbare Mischoxidpulver erhöhter Fließfähigkeit zu erhalten, und mittels welchen Verfahrens im Schritt c) kein lästiger Abstrom erzeugt wird.

2. Verfahren nach dem Anspruch 1, dadurch gekennzeichnet, daß die ein Oxid großer Reaktivität ergebende thermische Denitrierung durchgeführt wird, indem man feste Nitratteilchen, die vorher durch Kristallisation mittels Abkühlung der vom Schritt b) stammenden konzentrierten Lösung erhalten wurden, hauptsächlich bei einem Wasserdampfpartialdruck unter 8,7 kPa (65 mm Quecksilber) und direkt derart erhitzt, daß im Lauf der Erhitzung bis zu einer Temperatur von wenigstens 260 °C die Temperatur der festen Teilchen in jedem Augenblick unter ihrem Schmelzpunkt bleibt.

3. Verfahren nach dem Anspruch 2, dadurch gekennzeichnet, daß die ein Oxid großer Reaktivität ergebende thermische Denitrierung durchgeführt wird, indem man feste kugelförmige Teilchen, die vorher durch Zerstäubung der vom schritt (b) stammenden konzentrierten Lösung in ein gekühltes inertes Fluid erhalten wurden, hauptsächlich bei einem Wasserdampf-Partialdruck unter 8,7 kPa (65 mm Quecksilber) und direkt derart erhitzt, daß im Lauf der Erhitzung bis zu ziner Temperatur von wenigstens 260 °C die Temperatur der festen Teilchen in jedem Augenblick unter ihrem Schmelzpunkt bleibt.

4. Verfahren nach dem Anspruch 2, dadurch gekennzeichnet, daß die ein Oxid großer Reaktivität ergebende thermische Denitrierung durchgeführt wird, indem man feste kugelförmige Teilchen, die vorher durch Granulation auf einem durch das Oxid selber gebildeten Träger erhalten wurden, hauptsächlich bei einem Wasserdampf-Partialdruck unter 8,7 kPa (65 mm Quecksilber) und direkt derart erhitzt, daß im Lauf der Erhitzung auf eine Temperatur von wenigstens 260 °C die Temperatur der Teilchen in jedem Augenblick unter ihrem Schmelzpunkt bleibt.

5. Verfahren nach dem Anspruch 1, dadurch gekennzeichnet, daß die Denitrierung durchgeführt wird, indem man die vom Schritt (b) stammenden Nitrate in flüssiger Form hauptsächlich in zwei Stufen direkt erhitzt, wobei in der ersten die Erhitzung bis zu einer Temperatur im Bereich von 160 bis 260°C geführt wird, um einen entwässerten Feststoff zu ergeben, und sie in der zweiten bis zu einer Temperatur von höchstens gleich 600 °C geführt wird.

6. Verfahren nach dem Anspruch 1, dadurch gekennzeichnet, daß die ein Oxid vorbestimmter, durch die spezifische Oberfläche regulierter Reaktivität ergebende Denitrierung durchgeführt wird, indem man die vom Schritt (b) stammenden Nitrate in flüssiger Form hauptsächlich in zwei Stufen direkt erhitzt, wobei man in der ersten die vom Schritt (b) stammende Lösung unvollständig entwässert und in der zweiten das erhaltene Produkt unter gesteuertem Wasserdampfdurck zersetzt, der je nach dem auferlegten Wert die erhaltene Reaktivität bestimmt.

7. Verfahren nach irgendeinem der Ansprüche 1, 2, 5 oder 6, dadurch gekennzeichnet, daß man zwecks gänzlicher oder teilweiser Unterdrückung der Phasen zur Beseitigung des Stickstoffs in den verschiedenen thermischen Denitrierungsstufen die Reduktionsreaktion des Schrittes (e) direkt mit dem im Denitrierungsverlauf erhaltenen festen unschmelzbaren Zwischenprodukt vornimmt.

8. Verfahren nach irgendeinem der Ansprüche 1, 2, 5 bis 7, dadurch gekennzeichnet, daß die gesinterten Mischoxide aus Mischungen der Nitratlösungen von Uran und Plutonium und der Elemente der Th-Gruppe, soweit spaltbar oder brütbar, und Seltenerdelemente erhalten werden.

9. Verfahren nach irgendeinem der Ansprüche 1, 2, 5 bis 8, dadurch gekennzeichnet, daß die Seltenerdelemente Cer und Gadolinium sind.

10. Verfahren nach irgendeinem der Ansprüche 1, 2, 5 bis 9, dadurch gekennzeichnet, daß das in der Ausgangsnitratlösung enthaltene Uran zu einer oder zu mehreren der folgenden Kategorien gehört; natürliches, angereichertes unbestrahltes, verarmtes unbestrahltes, angereichertes bestrahltes, verarmtes bestrahltes Uran.

11. Verfahren nach irgendeinem der Ansprüche 1, 2, 5 bis 10, dadurch gekennzeichnet, daß die Gesamtheit oder ein Teil des in der Ausgangsnitratlösung enthaltenen Urans von einem Anreicherungszyklus durch Laser stammt.

12. Verfahren nach irgendeinem der Ansprüche 1, 2, 5 bis 11, dadurch gekennzeichnet, daß das in der Ausgangsnitratlösung enthaltene Uran von einem Anreicherungszyklus durch Laser stammt, der zu Uran in

11

unreiner metallischer Form führt, das die Vorbehandlungen einer Auflösung in Salpetersäure, in oxidierenden Medium oder nicht, und einer Reinigung durchmacht.

13. Verfahren nach irgendeinem der Ansprüche 1, 2, 5 bis 12, dadurch gekennzeichnet, daß die im Schritt (b) vorgenommene Konzentration bis zum Erhalten der Hexahydratformen des Uranylnitrats und der Pentahydrat- bzw. Hexahydratformen des Plutoniumnitrats in seinen IV- und/oder VI-Zuständen durchgeführt wird.